# EUROPEAN PATENT SPECIFICATION

(11) **EP 1 267 066 B1**
(45) Date of publication and mention of the grant of the patent: **08.04.2009**
(21) Application number: 01130961.4
(22) Date of filing: 28.12.2001
(51) Int. Cl.: F02M 35/024

(54) **Enbloc device for filtering the intake air of combustion engines**
Vorrichtung zum Filtern der Ansaugluft einer Brennkraftmaschine
Dispositif de filtrage de l'air d'admission d'un moteur à combustion interne

(30) Priority: 11.06.2001 IT BO010369
(43) Date of publication of application: 18.12.2002
(73) Proprietor: BMC S.R.L., 40059 Medicina (IT)
(72) Inventor: Bergami, Gaetano, 40059 Medicina (Bologna) (IT)
(74) Representative: Negrini, Elena

(56) References cited:
- DE-A- 4 313 913
- GB-A- 1 075 376
- GB-A- 1 273 251
- US-A- 4 746 339
- US-A- 4 878 930

## Description

The present invention relates to filters for filtering the intake air of combustion engines. Particularly the present invention refers to an enbloc device for filtering the intake air of internal combustion, supercharged and aspirated, engines especially with high performances and fit for being assembled into a related housing carried out in an intake duct.

In the automotive field, the air filtering has particular importance since avoids the inlet of foreign matter inside the engine.

There are known cylindrical or conical air filters fit to be fixed to an intake duct or enclosed into a casing with inlet openings for the ambient air and connected to a related intake duct.

The main drawback of the cylindrical or conical air filters consists in their high weight causing excessive stress of the related connections, with disconnection and failures risks, and increases the weight /power ratio reducing the performances of the vehicle in which said filters are installed.

Other drawback consists in theirs wide dimensions limiting the installation in several engine compartments.

There are known filtering devices with a flat shape having an undulated filtering element, generally made of polyester or paper, fixed to a heavy support fit to strengthen the filter and to airtight mate the walls of the related housing.

A polyurethan molding including the perimetric portion of the filtering element generally carries out the support.

The main drawback of said known flattened filters consists in that the support must have wide dimensions to give enough mechanical resistance to the filter, so being excessively heavy and in that the useful surface of the filtering element is inadequate because this latter must be moderately corrugated for allowing the diffusion of the polyurethan melted material between the interstices of the corrugated filtering device.

Another drawback consists in that the high reduction of the air flow through the filter caused by the high resistance of the polyester or paper filtering elements which further have the so-called "sponge effect" that causes technical problems to the sports engines due to humidity.

A further drawback consists in that the polyurethan support cannot withstand temperatures greater than 90° C, achievable inside the high performance engines.
Document DE 43 13 913 discloses a device for filtering the intake air of combustion engines including a filtering element corrugated and peripherally clamped to a support mean including at least a first and a second element respectively having a first and a second shaped edge for reproducing the peripheral profile of the filtering element. The first and a second element are detachable for replacing the filtering element.
The main object of the present invention is to propose an enbloc device for filtering the intake air of internal combustion engines extremely strong and reliable, suitable to withstand typical mechanical stress of the race vehicles and temperatures up to about 250° C, and at the same time light and fit for reducing the air flow resistances.
Further object of the present invention is to propose a device without the sponge effect and having a high filtering value of the air.
Another object is to propose also a device having limited external dimensions and a wide surface of the filtering element.
The objects above-mentioned are achieved according with the content of the claims. The characteristics of the invention are underlined in the following with particular reference with the attached drawings, in which:

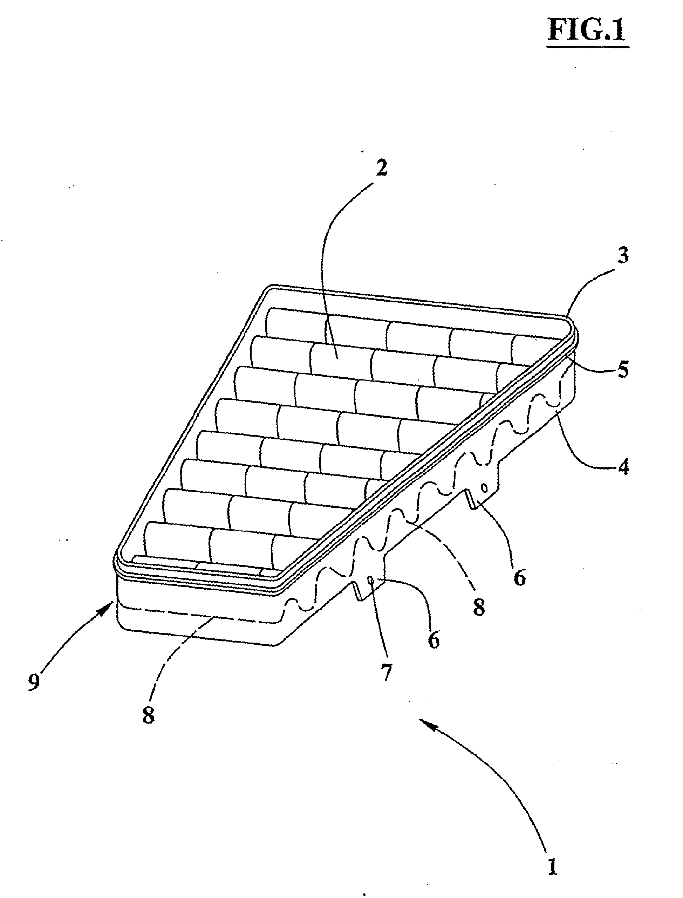

- figure 1 shows an axonometric view of the device object of the present invention;

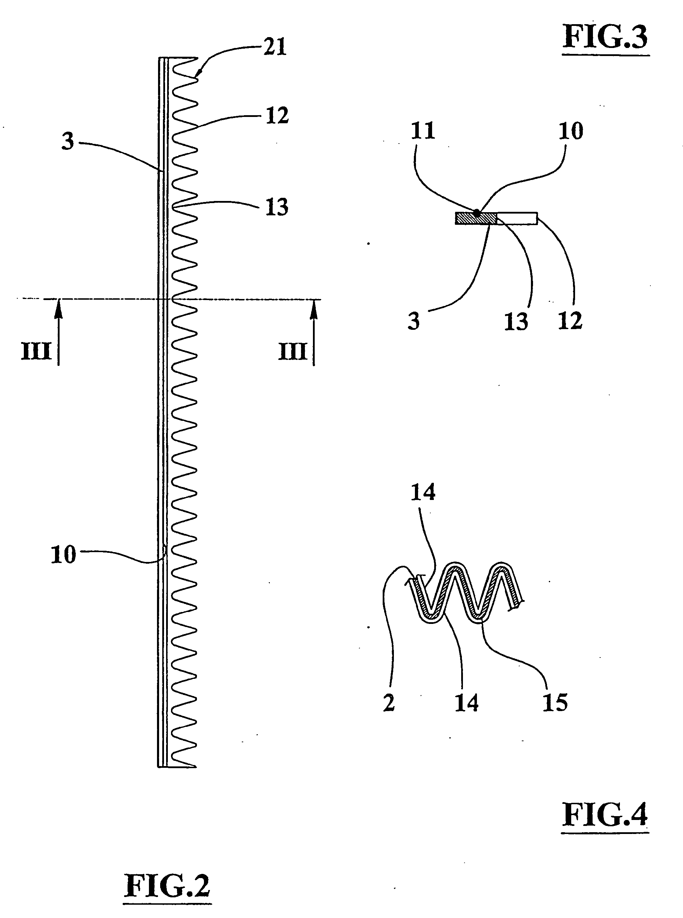

- figure 2 shows 1 a side view of a first element of the figure 1 device;
- figure 3 shows a section view according to the plan III-III of figure 2;
- figure 4 shows a partial enlarged section view of a filtering element of figure 1;

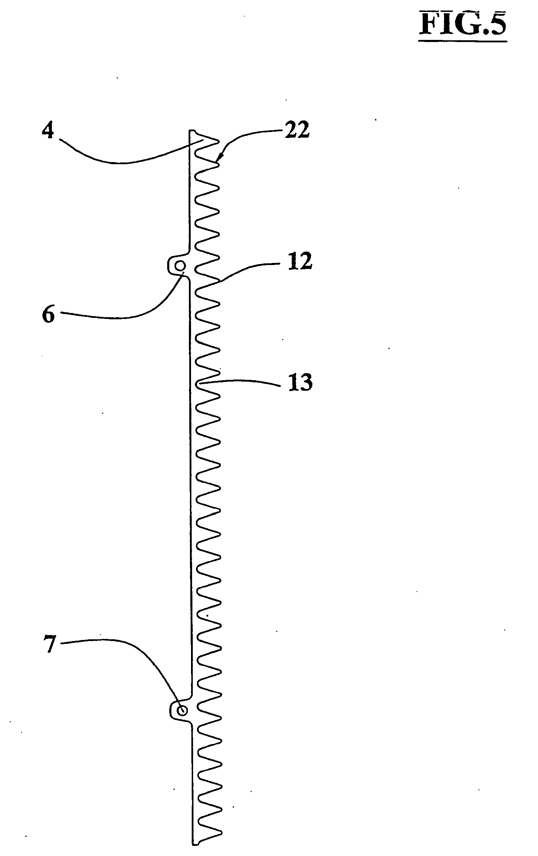

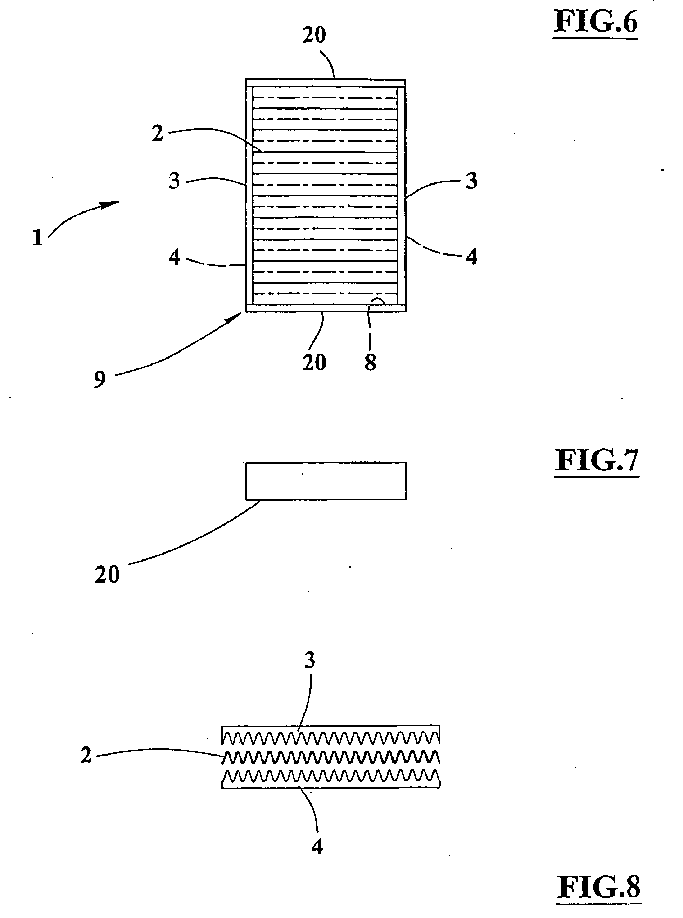

- figure 5 shows a side view of a second element of the figure 1 device;
- figures from 6 to 8 show respectively plan, front and longitudinal section views of a variant of the figure 1 device.

With reference to figures from 1 to 5, numeral 1 indicates an enbloc device for filtering the intake air of internal combustion engines including a corrugated filtering element 2 and a supporting mean 9.

The filtering element 2 includes two net layers 14, made of metal or composite synthetic material, between which it is interposed a filtering layer 15 in synthetic or natural fibers, preferably of cotton, woven for carrying out a fabric or merged for realizing a so-called nonwoven fabric.

In an assembly condition in a single block of the device 1, the fibers of the filtering layer are soaked with low viscosity oil.

The filtering element 2 is corrugated and has parallel folds following an approximately sinusoidal or zig-zag profile with rounded vertexes and has a plan approximately reproducing the shape of a housing for the device 1, carried out in an engine intake duct.

The support mean 9 includes two annular shaped elements, first 3 and second 4, reproducing the plan perimeter of the filtering element 2 and respectively having a shaped edge, first 21 and second 22, almost complementary and reproducing, the peripheral corrugated profile of the filtering element 2.

The shaped edges, first 21 and second 22, have a plurality of rounded recesses 13 and points 12 with related bending radiuses respectively equal or bigger and equal or lower than the bending radius of the corresponding corrugated sections of the filtering element 2.

Furthermore the recesses 13 and the points 12 are filleted by nearly rectilinear sections of the respective shaped edges, first 21 and second 22, for reproducing the zig-zag profile of the filtering element 2 folds.

Said shape of the elements first 3 and second 4 allows a perfect joining between these latter and the median perimetric portion of the filtering element 2.

The elements first 3 and second 4 of the support mean 9 are made of composite material with carbon fibers, Kevlar or fiber glass in a matrix of epoxidic synthetic resin.

The enbloc fixings or assembling between the elements first 3 and second 4 of the support mean 9 with the perimetric portion of the filtering element 2 are carried out by means of a two-component adhesive 8 of polymerized epoxidic type and hardened in autoclave at controlled temperatures and pressures.

The first element 3 of the support mean 9 has a housing 10, consisting of a peripheral groove, for sealing means 11 which substantially consists of an annular gasket made of elastic, high temperature and hydrocarbon proof material, of the type so-called O-Ring.

The second element 4 of the support mean 9 has a plurality of fixing means 6, each one consisting of a protruding flange with a hole 7.

The operation of the device 1 provides that this latter is positioned in correspondence of the related housing carried out in the engine intake duct and is fixed to said housing by means of screws or pins engaged in the holes 7.

The sealing means 11 mate the walls of the device 1 housing, preferably upstream the air flow, in order to force this latter to flow totally through the filtering element 2.

The dust particles and the foreign matters carried away by the air flow are held back by the filtering layer 15 and the oil.

The variant of the device shown in the figures from 6 to 8 provides that the filtering element 2 has a plant with four rectilinear sides and that the support element 9 includes two prismatic elements 20, rectilinear with rectangular section, suitable to be enbloc fixed, by means of the two-component adhesive 8, with respective rectilinear edges of the filtering element 2.

The corrugated edges of this latter are enbloc fixed to a couple of the first elements 3 and to a couple of the second elements 4 of the support element 9. The ends of the prismatic elements 20, first 3 and second 4, are enbloc fixed.

It is important to underline that the device 1 may include a filtering element 2 with fillet section very close and therefore having an extremely wide filtering surface.

The main advantage of the present invention is to provide an enbloc device for filtering the intake air of internal combustion engines extremely strong and reliable, suitable to withstand typical mechanical stress of the race vehicles and temperatures up to about 250° C and at the same time light and fit for reducing the air flow resistances, having a wide surface of the filtering element.

Further advantage is to provide a device without the sponge effect and having a high filtering value of the air and a low building cost and having a life not less than around 300.000 km of route covered by the vehicle on which it is installed, however usable with a minimum maintenance and having a filter easy to be disposed since mainly carried out with a natural material.

## Claims

1. Enbloc device (1) for filtering the intake air of combustion engines including a filtering element (2) corrugated and peripherally fixed to a support mean (9), including at least a first element (3) and at least a second element (4) respectively having a first shaped edge (21) and a second shaped edge (22) for reproducing the peripheral profile of the filtering element (2), the first shaped edge (21) and the second shaped edge (22) are fixed to the filtering element (2) in single block; the shaped edges, first (21) and second (22), have a plurality of recesses (13) and points (12) having related bending radiuses respectively equal or greater and equal or lower than the bending radius of the corresponding corrugated sections of the filtering element (2); said device (1) being **characterized in that** the support mean (9) is made at least of carbon fibers or Kevlar of fiberglass in a matrix of synthetic resin, and the filtering element (2) includes two net layers (14) between which a filtering layer (15) is interposed.

2. Device according to claim 1 **characterized in that** the points (12) and the recesses (13) are fillet by almost rectilinear sections of the respective shaped edges, first (21) and second (22).

3. Device according to claim 1 **characterized in that** the elements, first (3) and second (4), of the support mean (9) are annular.

4. Device according to claim 1 **characterized in that** at least one of the elements, first (3) and second (4), of the support mean (9) has a housing (10) for sealing means (11).

5. Device according to claim 4 **characterized in that** the sealing means (11) consist of an O-Ring type gasket.

6. Device according to claim 1 **characterized in that** at least one of the elements, first (3) and second (4), of the support mean (9) has a plurality of fixing means (6).

7. Device according to claim 6 **characterized in that** each fixing mean (6) has at least a hole (7).

8. Device according to claim 1 **characterized in that** the support mean (9) includes a couple of prismatic elements (20) fit to be fixed in a single block with respective rectilinear edges of the filtering element (2) whose corrugated edges are enbloc fixed to two edges of the at least first element (3) and to two edges of the at least second element (4), the ends of the prismatic elements (20), first (3) and second (4), being fixed in a single block.

9. Device according to claim 1 **characterized in that** the net layers (14) are made of metal or composite synthetic material and the filtering layer (15) is made of cotton fibers or natural fibers or woven or nonwoven synthetic fibers and soaked with low viscosity oil.

10. Device according to any of the preceding claims **characterized in that** the enbloc fixings are carried out by means of a two-component adhesive (8).

11. Device according to any of the preceding claims **characterized in that** the fixings with two-component adhesive (8) are hardened in autoclave.

## Patentansprüche

1. En bloc Vorrichtung (1) zum Filtern der Ansaugluft von Verbrennungsmotoren umfassend:
ein Filterelement (2), das gewellt und umfänglich an einem Unterstützungsmittel (9) befestigt ist, das mindestens ein erstes Element (3) und mindestens ein zweites Element (4) umfasst, die entsprechend einen ersten geformten Rand (21) und einen zweiten geformten Rand (22) zum Nachbilden des umfänglichen Profils des Filterelements (2) aufweisen,
der erste geformte Rand (21) und der zweite geformte Rand (22) sind an dem Filterelement (2) in einem Block befestigt;
der erste (21) und zweite geformte Rand (22) haben eine Mehrzahl an Vertiefungen (13) und Spitzen (12) mit dazugehörigen Krümmungsradien die entsprechend gleich oder größer und gleich oder kleiner als der Krümmungsradius des entsprechenden gewellten Abschnitts des Filterelements (2) sind,
die Vorrichtung (1) ist **dadurch gekennzeichnet, dass**
das Unterstützungsmittel (9) mindestens aus Karbonfasem oder Kevlar aus Fiberglas in einer Kunstharzmatrix besteht und
das Filterelement (2) zwei Netzschichten (14) umfasst, zwischen denen eine Filterschicht (15) zwischen geordnet ist.

2. Vorrichtung gemäß Anspruch 1, **dadurch gekennzeichnet, dass** die Spitzen (12) und die Vertiefungen (13) durch annähernd geradlinige Abschnitte der jeweiligen ersten (21) und zweiten Ränder (22) geglättet sind.

3. Vorrichtung gemäß Anspruch 1, **dadurch gekennzeichnet, dass** die ersten (3) und zweiten Elemente (4) des Unterstützungsmittels (9) ringförmig sind.

4. Vorrichtung gemäß Anspruch 1, **dadurch gekennzeichnet, dass** mindestens eines der ersten (3) und zweiten Elemente (4) des Unterstützungsmittels (9) eine Aufnahme (10) für Dichtmittel (11) aufweist.

5. Vorrichtung gemäß Anspruch 4, **dadurch gekennzeichnet, dass** die Dichtmittel (11) aus einer O-Ring Dichtung bestehen.

6. Vorrichtung gemäß Anspruch 1, **dadurch gekennzeichnet, dass** mindestens eines der ersten (3) und zweiten Elemente (4) des Unterstützungsmittels (9) eine Mehrzahl von Befestigungsmitteln (6) aufweist.

7. Vorrichtung gemäß Anspruch 6, **dadurch gekennzeichnet, dass** jedes Befestigungsmittel (6) mindestens ein Loch (7) aufweist.

8. Vorrichtung gemäß Anspruch 1, **dadurch gekennzeichnet, dass** das Unterstützungsmittel (9) ein Paar prismatischer Elemente (20) aufweist, die geeignet sind, um in einem einzelnen Block mit den jeweiligen gradlinigen Rändern des Filterelements (2) befestigt zu werden, dessen gewellte Ränder en bloc an zwei Rändern des mindestens ersten Elements (3) und an zwei Rändern des mindestens zweiten Elements (4) befestigt sind, während die ersten (3) und zweiten Enden (4) der prismatischen Elemente (20) in einem einzigen Block befestigt werden.

9. Vorrichtung gemäß Anspruch 1, **dadurch gekennzeichnet, dass** die Netzschichten (14) aus Metall oder Verbundkunststoff bestehen und die Filterschicht (15) aus Baumwollfasern oder Naturfasern oder gewebten oder nicht gewebten Kunststofffasern besteht und mit niedrig viskosem Öl durchtränkt ist.

10. Vorrichtung gemäß einem der vorhergehenden Ansprüche, **dadurch gekennzeichnet, dass** die en bloc Befestigungen mittels eines Zweikomponentenklebestoffs (8) ausgeführt sind.

11. Vorrichtung gemäß einem der vorhergehenden Ansprüche, **dadurch gekennzeichnet, dass** die Befestigungen mit Zweikomponentenklebstoff (8) im Autoklaven gehärtet wurden.

## Revendications

1. Dispositif monobloc (1) destiné à filtrer l'air d'admission de moteurs à combustion comportant un élément de filtrage (2) ondulé et fixé de manière périphérique sur un moyen de support (9) comportant au moins un premier élément (3) et au moins un second élément (4) présentant respectivement un premier bord façonné (21) et un second bord façonné (22) afin de reproduire le profil périphérique de l'élément de filtrage (2), le premier bord façonné (21) et le second bord façonné (22) sont fixés sur l'élément de filtrage (2) en un seul bloc ; les premier (21) et second (22) bords façonnés comportent une pluralité de creux (13) et de pointes (12) présentant des rayons de courbure associés respectivement supérieurs ou égaux ou inférieurs ou égaux au rayon de courbure des sections ondulées correspondantes de l'élément de filtrage (2), ledit dispositif (1) étant **caractérisé en ce que** le moyen de support (9) est réalisé au moins à base de fibres de carbone ou de Kevlar ou de fibres de verre dans une matrice de résine synthétique, et l'élément de filtrage (2) comporte deux couches à maille (14) entre lesquelles une couche de filtrage (15) est interposée.

2. Dispositif selon la revendication 1, **caractérisé en ce que** les pointes (12) et les creux (13) sont complétés par les sections presque rectilignes des premier (21) et second (22) bords façonnés respectifs.

3. Dispositif selon la revendication 1, **caractérisé en ce que** les premier (3) et second (4) éléments du moyen de support (9) sont annulaires.

4. Dispositif selon la revendication 1, **caractérisé en ce qu'**au moins l'un des premier (3) et second (4) éléments du moyen de support (9) comporte un logement (10) pour un moyen d'étanchéité (11).

5. Dispositif selon la revendication 4, **caractérisé en ce que** le moyen d'étanchéité (11) consiste en une garniture du type joint torique.

6. Dispositif selon la revendication 1, **caractérisé en ce qu'**au moins l'un des premier (3) et second (4) éléments du moyen de support (9) comporte une pluralité d'élément de fixation (6).

7. Dispositif selon la revendication 6, **caractérisé en ce que** chaque moyen de fixation (6) comporte au moins un orifice (7).

8. Dispositif selon la revendication 1, **caractérisé en ce que** le moyen de support (9) comporte un couple d'éléments prismatiques (20) adaptés de manière à être fixés en un seul bloc avec des bords rectilignes respectifs de l'élément de filtrage (2) dont les bords ondulés sont fixés de manière monobloc sur deux bords d'au moins le premier élément (3) et deux bords d'au moins le second élément (4), les extrémités des éléments prismatiques (20), les premier (3) et second (4) éléments étant fixés en un seul bloc.

9. Dispositif selon la revendication 1, **caractérisé en ce que** les couches à maille (14) sont réalisées en métal ou en matériau synthétique composite et la couche de filtrage (15) est réalisée à base de fibres de coton ou de fibres naturelles ou de fibres synthétiques tissées ou non tissées et imprégnées d'une huile à basse viscosité.

10. Dispositif selon l'une quelconque des revendications précédentes, **caractérisé en ce que** les éléments de fixation monobloc sont réalisés au moyen d'un adhésif à deux composants (8).

11. Dispositif selon l'une quelconque des revendications précédentes, **caractérisé en ce que** les éléments de fixation avec un adhésif à deux composants (8) sont durcis en autoclave.
